# EUROPÄISCHE PATENTSCHRIFT

(11) **EP 3 348 880 B1**
(45) Veröffentlichungstag und Bekanntmachung des Hinweises auf die Patenterteilung: **23.03.2022**
(21) Anmeldenummer: 17151322.9
(22) Anmeldetag: 13.01.2017
(51) Int. Cl.: F16J 13/10, E03F 5/04, E02D 29/14, E03F 5/02, E03F 7/04, E03B 3/03, F16L 45/00

(54) **DECKELSYSTEM FÜR ROHRBEHÄLTERGEHÄUSE**
CLOSURE SYSTEM FOR TUBE CONTAINER HOUSING
SYSTÈME DE COUVERCLE POUR BOÎTIER DE RÉCIPIENT TUBULAIRE

(43) Veröffentlichungstag der Anmeldung: 18.07.2018
(73) Patentinhaber: Kessel AG, 85101 Lenting (DE)
(72) Erfinder: Kessel, Bernhard, 85101 Lenting (DE)
(74) Vertreter: Grünecker Patent- und Rechtsanwälte PartG mbB

(56) Entgegenhaltungen:
- EP-A1- 3 026 185
- EP-A1- 3 103 932
- EP-A2- 2 423 391
- AT-U1- 9 519
- DE-U1-202006 012 819

## Beschreibung

Die vorliegende Erfindung betrifft ein Deckelsystem zum werkzeuglosen, wiederholbaren Verschließen und Öffnen eines Rohrbehältergehäuses für Abwässer, insbesondere für ein Rückstauverschlussgehäuse, gemäß dem Oberbegriff des unabhängigen Anspruchs 1.

Es sind Deckelsysteme für abwasserführende Rohrbehältergehäuse bekannt, bei denen der Deckel an zwei Stellen gehalten und in Schräglage mit einer Stirnseite voraus in die Gehäuseöffnung eingeführt und mit der Stirnseite auf Stoß mit dem Gehäuse drehbar verankert wird. Anschließend wird der Deckel über diesen Stoß-Drehpunkt gegen die Gehäuseöffnung gedrückt und dann, während der Deckel weiterhin mit der Hand auf die Gehäuseöffnung sowie den Stoß-Drückpunkt gedrückt wird, mit der anderen Hand an weiteren Kontaktpunkten zum Gehäuse befestigt.

Weiterhin sind Systeme bekannt, bei denen aufgrund einer vorhandenen Nut-Feder-Anordnung zwischen Deckel und Gehäuse, der Deckel in waagrechter Orientierung gehalten, senkrecht zur Deckelöffnung auf die Deckelöffnung des Gehäuse aufgesetzt werden muss, und anschließend, während mit einer Hand weiterhin senkrecht zur Deckelöffnung Druck auf den Deckel ausgeübt wird, der Deckel mit dem Gehäuse nacheinander ander mehreren Punkten verrastet wird. Systeme mit zumindest ähnlichen Funktionsweisen sind in den Druckschriften EP 3 103 932 A1, EP 3 026 185 A1 und AT 009 519 U1 beschrieben. Weiterer Stand der Technik wird in der DE 20 2006 012 819 U1 und der EP 2 423 391 A2 genannt.

Beide bekannten Systeme sind in der Praxis vergleichsweise umständlich zu handhaben, da Sie den gleichzeitigen Einsatz von mindesten zwei Händen benötigen, um das Deckelsystem sitzfest am Gehäuse befestigen zu können. Damit einher geht die Notwendigkeit einer guten Zugänglichkeit zum Deckel, um diesen zuverlässig schließen zu können. Oft sind die Gehäuse samt Deckel jedoch an schwer zugänglichen Orten verbaut, beispielsweise in einem engen Schacht im Boden, der den Einsatz von beiden Händen erschwert, und teilweise nahezu unmöglich macht.

Somit besteht bei bestehenden Systemen, insbesondere bei schlechter Zugänglichkeit, ein erhöhte Gefahr einer Fehlmontage, beispielsweise durch Verkanten dichtungsrelevanter Teile zwischen Deckel und Gehäuse, was in der Praxis oft erst bei einer Überdrucksituation im Gehäuse, etwa bei einem Abwasserrückstau, bemerkt wird. Auch können in Extremsituationen der Deckel samt Gehäuse unter Wasser liegen, so dass der Bediener das Deckelsystem rein durch seinen Tastsinn bedienen muss, was bei bekannten System sehr schwierig ist und viel Übung erfordert. Es ist daher Aufgabe der vorliegenden Erfindung, die Bedienbarkeit von bekannten Deckelsystemen für abwasserführende Gehäuse zu verbessern, um somit die Zuverlässigkeit des Deckelsystems zu erhöhen und Installations- und Wartungszeiten zu verkürzen.

Die vorliegende Erfindung löst diese Aufgabe mit den Merkmalen des Anspruchs 1.

Anspruch 1 betrifft ein Deckelsystem zum werkzeuglosen, wiederholbaren Verschließen und Öffnen eines Rohrbehältergehäuses für Abwässer, insbesondere eines Rückstauverschlussgehäuses, mit einem Deckel, welcher eine Deckelöffnung eines Rohrbehältergehäuses durch ein Anlegen des Deckels an einen Deckelsitz der Deckelöffnung sitzfest verschließen kann, und einer am Deckel angeordneten Drehpunkt-Ankervorrichtung, welche den Deckel an einem Anlagebereich eines Rohrbehältergehäuses positionieren und an diesem Anlagebereich und um diesen Anlagebereich drehbar verankern kann, und einem am Deckel angeordneten und zur Drehpunkt-Ankervorrichtung beabstandeten Verriegelungssystem, aufweisend einen rotierbaren Verriegelungshebel und ein mit dem Verriegelungshebel in Wirkung stehendes Schließsystem zum Verriegeln und Entriegeln des Deckels an dem Rohrbehältergehäuse, wobei der Verriegelungshebel zwischen einer verriegelten Stellung und einer entriegelten Stellung hin und her rotierbar ist, dadurch gekennzeichnet, dass das Verriegelungssystem ein sitzfestes Verschließen der Deckelöffnung des Rohrbehältergehäuses durch ein Halten und Manipulieren des Deckelsystems alleinig durch den Verriegelungshebel ermöglicht.

Ein Ausführen des Verriegelungssystems derart, dass man das Deckelsystem alleinig über ein Halten und Manipulieren des Verriegelungshebels sitzfest verschließen kann, also z.B. das Deckelsystem allein durch Greifen des Verriegelungshebels im Raum halten, positionieren und drehen, auf die Deckelöffnung drehbar aufsetzen, absenken und sitzfest verriegeln kann, erleichtert dem Bediener in der Praxis die Handhabung des Deckelsystems und erlaubt eine echte Einhand-Bedienung beim Verschließen des Deckelsystems. Hierbei umfasst ein Manipulieren des Deckelsystems ein Hantieren oder geschicktes Umgehen mit dem Deckelsystem beziehungsweise ein Handhaben des Deckelsystems. Weiterhin reduziert die Erfindung Fehlmontagen in der Praxis, insbesondere bei schwierigen Einbaubedingungen.

In einer möglichen Ausführungsform kann die Drehpunkt-Ankervorrichtung den Deckel durch ein Andrücken gegen einen Anlagebereich eines Rohrbehältergehäuses, insbesondere gegen einen Anlagebereich innerhalb der Deckelöffnung des Rohrbehältergehäuses, an dem Rohrbehältergehäuse positionieren und an diesem Anlagebereich und um diesen Anlagebereich drehbar verankern, und dabei kann das Verriegelungssystem derart eingerichtet sein, dass eine drückende Rotation des Verriegelungshebels hin zur Drehpunkt-Ankervorrichtung den Verriegelungshebel in die verriegelte Stellung bewegt und eine ziehende Rotation des Verriegelungshebels weg von der Drehpunkt-Ankervorrichtung den Verriegelungshebel in die entriegelte Stellung bewegt.

Diese spezielle Ausführung des Verriegelungssystems ermöglicht es, dass die Krafteinwirkung auf den Verriegelungshebel bei einem Schließvorgang vorteilhaft in Richtung der DrehpunktAnkervorrichtung und somit in Richtung des Anlagebereichs des Gehäuses wirkt. Somit wird durch die Betätigung des Verriegelungshebels automatisch auch das Andrücken gegen den Anlagebereich des Gehäuses realisiert, was ein ungewolltes Verrutschen des Deckels im Vergleich zum Gehäuse während des Verriegelungsvorgangs verhindert. Entsprechend vorteilhaft ist ein Ziehen des Verriegelungshebels weg von der Drehpunkt-Ankervorrichtung und somit weg von dem Anlagebereich des Gehäuses bei einem Entriegelungsvorgang des Deckelsystems. Somit kann beispielsweise der Deckel im fließenden Übergang zum Entriegeln von dem Anlagebereich gelöst und anschließend einfacher aus dem Deckelsitz gehoben werden. Zuvor genannte Ausführungen ermöglichen somit eine besonders vorteilhafte Einhand-Bedienung des Deckelsystems.

In einer vorteilhaften Ausführungsform kann das Schließsystem an zwei gegenüberliegenden Seiten des Deckels je ein Schloss aufweisen und der Verriegelungshebel die Oberseite des Deckels von dem einen Schloss hin zu dem anderen Schloss überspannen.

Dies ermöglicht ein gleichzeitiges Verriegeln des Deckels mit dem Rohrbehältergehäuse an zwei gegenüberliegenden Seiten des Deckels und somit an zwei wichtigen Punkten, um den Deckel sitzfestes zu verschließen. Dies reduziert beim Verriegeln das Risiko eines ungewollten Verkantens von Teilen. Der überspannende Verriegelungshebel erlaubt zudem eine komfortable Einhand-Bedienung.

Für eine besondere Ausführungsform kann der Verriegelungshebel den Deckel im verriegelten Zustand bogenförmig überspannen, so dass ein größter Abstand zwischen Deckel und verriegeltem Verriegelungshebel in einem mittigen Bereich des Deckels realisiert wird, und/oder der Verriegelungshebel sich in verriegelter Stellung hin zum Deckelzentrum erstrecken kann.

Dadurch, dass bei verriegeltem Verriegelungshebel ein größter Abstand zwischen Deckel und Hebel in einem mittigen Bereich des Deckels realisiert wird, greift der Bediener bereits beim Verschließen intuitiv diesen mittigen Hebelbereich. Hierdurch hat er das Deckelsystem in einer besonders günstigen Position in der Hand und kann das System besonders vorteilhaft manipulieren.

Ein Erstrecken des Verriegelungshebels in verriegelter Stellung hin zum Deckelzentrum stellt sicher, dass beim Verschließen des Verriegelungshebels dieser in einen vergleichsweise gut zugänglichen, zentralen Bereich des Deckelsystems vom Bediener bewegt werden kann. Dies ist insbesondere bei schwer zugänglichen, schachtverbauten Rohrbehältern von Vorteil. Beim Öffnungsvorgang ist der Verriegelungshebel ebenfalls gut zugänglich.

Weiterhin kann in einer Ausführungsform ein lichter Abstand zwischen Verriegelungshebel und Deckel gebildet sein, wobei der lichte Abstand in der entriegelten Stellung größer ist als in der verriegelten Stellung.

Diese Ausführung ermöglicht eine besonders gutes Greifen des entriegelten Verriegelungshebels und somit das Halten und Manipulieren beim Verschließen.

Weiterhin ermöglicht dies eine besonders günstige Bedienung des rotierbaren Verriegelungshebels, da bei einem Verriegelungsvorgang der Verriegelungshebel auch in Richtung des Deckels und somit in Richtung der Deckelöffnung gedrückt werden kann und bei einem Entriegelungsvorgang der Verriegelungshebel auch vom Deckel weggezogen und somit von der Deckelöffnung weggezogen werden kann. Hierdurch wird ein ungewolltes Verrutschen und Verkanten oder falsches Sitzen des Deckels beim Verriegeln weiter reduziert und ein Öffnen des Deckels erleichtert.

Günstigerweise kann in einer Ausführungsform die Drehpunkt-Ankervorrichtung an einer schmalen Stirnseite des Deckels angeordnet sein, und /oder die Drehpunkt-Ankervorrichtung eine Hervorstehung, insbesondere einen nasenartigen Vorsprung, aufweisen, welche in die Deckelöffnung eines Rohrbehältergehäuses eintauchen und den Deckel in dem Rohrbehältergehäuse in Richtung der Deckelöffnung hinterschnittig verankern kann.

Eine Anordnung der Drehpunkt-Ankervorrichtung an einer schmalen Stirnseite des Deckels ermöglicht ein vergleichsweise einfaches in-Kontakt-bringen des Deckels mit der Anlagefläche eines Rohrbehältergehäuses, beispielsweise in einer schrägen, mit der Stirnseite abgesenkten Stellung des Deckels. Auch kann somit die Anlagefläche des Rohrbehältergehäuses vergleichsweise klein ausgeführt sein. Ein drehen des Deckelsystems um die Anlagefläche des Rohrbehältergehäuses im Bereich der schmale Stirnseite ermöglicht zudem einen vergleichsweise großen Hebelarm über die restliche Ausdehnung des Deckels zum Verschließen der Deckelöffnung zu nutzen. Ein Verankern des Deckelsystems mit dem Rohrbehältergehäuse an der schmalen Stirnseite des Deckels erlaubt es außerdem, den Deckel an dieser Stelle in seinen Abmessungen schmal zu halten.

Eine Hervorstehung an der Drehpunkt-Ankervorrichtung, insbesondere in Form einer hervorstehenden Nase, und ein damit verbundenes Eintauchen in die Deckelöffnung und ein hinterschnittiges Verankern des Deckels am Rohrbehältergehäuse ermöglicht eine besonders schnelle, leichte und zuverlässige, drehbare Verankerung am Rohrbehältergehäuse zu realisieren. Das hinterschnittige Verankern wirkt zudem zuverlässig Abhebekräften an dieser Stelle des Deckels entgegen.

Weiterhin optional kann in einer Ausführungsform die Drehpunkt-Ankervorrichtung ein im Querschnitt U-förmiges Profil aufweisen, welches zwischen den Schenkeln des U einen rohrbehältergehäuseseitig vorspringenden Anlagebereich halten kann, insbesondere kann ein Schenkel des U etwa in der Ebene der Hauptausdehnung des Deckels liegen und die Öffnung des U dabei nach außen zeigen.

Ein U-förmiges Querschnittsprofil ermöglicht mit dem einen, unteren Schenkel des U eine in Deckelöffnungsrichtung hinterschnittige Verankerung des Deckels am Rohrbehältergehäuse zu bilden, und mit dem anderen, oberen Schenkel des U einen Teil eines Drehanschlags mit dem Rohrbehältergehäuse zu bilden, und verhindert gleichzeitig ein unbeabsichtigtes Hineinfallen des Deckels in die Deckelöffnung. Auch kann bei verschlossenem Deckelsystem, der den Drehanschlag mitbildende, obere U Schenkel mit dem Deckelsitz der Deckelöffnung in Anlage sein.

Dass ein Schenkel des U in der Ebene der Hauptausdehnung liegt, ermöglicht eine vergleichsweise schmale Ausführung der Drehpunkt-Ankervorrichtung. Dass die Öffnung des U hierbei von der Stirnseite nach außen zeigt, erleichtert es, die Drehpunkt-Ankervorrichtung mit einem vorspringenden Anlagebereich des Rohrbehältergehäuses in eine drehbare und gleichzeitig verankernde Position zu bringen.

In einer Variante der Erfindung kann die Drehpunkt-Ankervorrichtung in der einen Hälfte des Deckels angeordnet sein, insbesondere an einem Ende des Deckels, und die Rotationsachse des Verriegelungshebels in der anderen Hälfte des Deckels angeordnet sein.

Somit ist eine vorteilhafte Krafteinleitung an dem Deckelsystem während des Verschließvorgangs gewährleistet.

Besonders vorteilhaft kann der gemeinsame Massenschwerpunkt der Nicht-Verriegelungshebel-Teile des Deckelsystems zwischen der Drehpunkt-Ankervorrichtung und der Rotationsachse des Verriegelungshebels liegen, so dass sich der Deckel bei einem Halten des Deckelsystems lediglich an dem Verriegelungshebel, automatisch mit der DrehpunktAnkervorrichtung voraus absenkt.

Dies erleichtert das Verschließen eines Rohrbehältergehäuses, da sich die DrehpunktAnkervorrichtung automatisch zum Gehäuse hin absenkt und somit sehr einfach mit diesem in Kontakt gebracht werden kann.

Es wird vorgeschlagen, dass in einer Ausführungsform das Schließsystem mit dem Verriegelungshebel rotiert und derart ausgeführt ist, dass sich beim Halten des Deckelsystems lediglich am Verriegelungshebel, das Schließsystem automatisch relativ zum Deckel in die entriegelte Stellung begibt, wobei in der entriegelten Stellung eine Aufnahmeöffnung des Schließsystems zum Aufnehmen eines Rohrbehältergehäuseteils von der dem Rohrbehältergehäuse zugewandten Unterseite des Deckels zugänglich ist.

Eine solch vorteilhafte Ausführung, in der sich das Verschließsystem automatisch in eine entriegelte Aufnahmeposition begibt, erleichtert insbesondere den Verschließvorgang der Deckelöffnung, da hier kein zusätzlicher Arbeitsschritt vom Bediener gemacht werden muss. Zusätzlich werden die Möglichkeiten der Fehlbedienung reduziert.

In einer weiteren möglichen Ausführungsform ist das Deckelsystem zum werkzeuglosen, wiederholbaren Verschließen und Öffnen eines Rückstauverschlussgehäuses, wobei das Deckelsystem einen am Deckel angeordneten Rückstauklappenbetätigungshebel aufweisen kann, und der Rückstauklappenbetätigungshebel so zum Verriegelungshebel angeordnet sein kann, dass ein Entriegeln des Verriegelungshebels ein vorheriges Betätigen des Rückstauklappenbetätigungshebels erfordert.

Durch eine spezielle Anordnung des Rückstauklappenbetätigungshebels zum Verriegelungshebel kann zuverlässig erreicht werden, dass der Bediener erst den Rückstauklappenbetätigungshebel betätigen muss, bevor der den Entriegelungshebel entriegeln kann. So kann beispielsweise eine erzwungene, vorangehende Betätigung des Rückstauklappenbetätigungshebels sicherstellen, dass der Deckel erst geöffnet werden kann, wenn die Rückstauklappe ebenfalls freigegeben und dadurch gegebenenfalls noch gehäuseseitig angestautes Abwasser aus dem Rohrbehälter entweichen konnte.

Wahlweise kann in einer Ausführungsform der Deckel zwischen der DrehpunktAnkervorrichtung und dem Schließsystem mindestens eine seitliche Führungsaussparung, insbesondere eine ösenförmige Führungsaussparung, zur Aufnahme mindestens eines rohrbehältergehäuseseitigen Führungszapfens aufweist, um den Deckel bei einem Drehen des Deckels um den Anlagebereich in Richtung der Deckelöffnung führen zu können.

Eine seitliche Führungsaussparung ermöglicht es, das Deckelsystem bei einer drehenden Verschließbewegung in Richtung der Deckelöffnung seitlich zu führen und so die Gefahr eines Verkantens des Deckels weiter zu minimieren. Es hat sich weiterhin in der Praxis gezeigt, dass eine seitliche Führung in Form einer Aussparung und nicht etwa in Form einer Hervorstehung besonders vorteilhaft ist und ein zuverlässiges Zusammenspiel von Deckelsystem und Rohrbehältergehäuse sicherstellt.

Ein optionales Ausführen der Führungsaussparung in Form einer Öse hat den besonderen Vorteil, dass der Bediener von oben auf das Durchgangsloch der Öse blickend, sofort sieht, wenn sich ein rohrbehältergehäuseseitiger Führungszapfen korrekt in die ösenförmige Führungsaussparung gefunden hat. Das Risiko eines nicht sitzfesten Verschließens der Deckelöffnung sowie die notwendige Bedienzeit werden somit reduziert.

In einer besonderen Ausführungsform kann das Deckelsystem mit dem Verriegelungshebel in der verriegelten Stellung die Deckelöffnung vollständig entlang des Deckelsitzes flüßigkeitsdicht, insbesondere bis mindestens 0,1 bar Flüssigkeitsüberdruck, besonders bis mindestens 0,5 bar Flüssigkeitsüberdruck, verschließen.

Derartige Ausführungen des Deckelsystems ermöglichen es, dieses System bei diversen Abwasserrohrbehältern, insbesondere bei Rückstauverschlüssen, in unterschiedlichen Einsatzfeldern zuverlässig und langlebig zu nutzen. Ein flüssigkeitsdichtes Verschließen der Deckelöffnung durch ein Halten und Manipulieren des Deckelsystems alleinig durch den Verriegelungshebel reduziert weiterhin die Bedienzeit.

Die anfangs genannte Aufgabe wird weiterhin durch einen Rohrbehälter für Abwässer, insbesondere durch einen Rückstauverschluss, mit einem Rohrbehältergehäuse mit einer Deckelöffnung, und einem Deckelsystem gemäß einer der vorherigen Ausführungen gelöst.

Die zuvor ausgeführten Funktionen und Vorteile kommen hierbei ebenso zum Tragen.

In einer besonders vorteilhaften Ausführungsform kann das Rohrbehältergehäuse entsprechend mindestens einen Führungszapfen aufweisen, welcher von mindestens einer Führungsaussparung des Deckelsystems aufgenommen werden kann, insbesondere kann sich dabei der mindestens eine Führungszapfen auf seiner im verschlossenen Zustand der DrehpunktAnkervorrichtung zugewandten Seite und/oder auf seiner dem Schließsystem zugewandten Seite und/oder auf seiner der Deckelöffnung abgewandten Seite, mit zunehmender Entfernung zum Rohrbehältergehäuse verjüngen, besonders sich dabei in einer kurvigen Kontur und/oder angefasten Kontur stetig verjüngen.

Das Zusammenspiel von Führungszapfen und Führungsaussparung erleichtert den Verschließvorgang, da der Deckel seitlich geführt und ein ungewolltes Verkanten des Deckels weiter reduziert wird.

Das oben genannte, optionale Verjüngen des Führungszapfens an den genannten Seiten erleichtert das zuvor genannte Zusammenspiel. Speziell das Verjüngen auf der der DrehpunktAnkervorrichtung zugewandten Seite ermöglicht es, beim drehenden Absenken des Deckels auf die Deckelöffnung die Drehpunkt-Ankervorrichtung weiter gegen den Anlagebereich in eine vorgesehene Endposition zu drücken. Das zusätzlich optionale stetige Verjüngen in Form einer kurvigen und/oder angefasten Kontur hat sich in der Praxis als besonders vorteilhaft und widerstandsfähig erwiesen.

Im Folgenden werden mögliche Ausführungsformen der Erfindung, welche mindestens teilweise die zuvor genannten Ausführungsformen kombinieren, anhand der Figuren näher erläutert.

Dabei zeigen:
- Figur 1: eine perspektivische Ansicht von oben auf eine ersten Ausführungsform eines erfindungsgemäßen Deckelsystems, hier in der beispielhaften Ausführung eines Deckelsystems für einen Rückstauverschluss, mit einem Verriegelungssystem aufweisend einen verriegelten Verriegelungshebel sowie mit einem Rückstauklappenbetätigungshebel in einer eine Rückstauklappe dauerhaft verschließenden Stellung,
- Figur 2: eine perspektive Ansicht von unten auf das Deckelsystem aus Figur 1,
- Figur 3: eine Seitenansicht des Deckelsystems aus Figur 1, wobei ein Schloss des Verriegelungssystems vertikal und parallel zu einer Längsachse des Deckelsystems geschnitten ist,
- Figur 4: eine Seitenansicht des Deckelsystem aus Figur 1 in einer zur Horizontalen schrägen Lage, wobei das Deckelsystem frei und nur an dem Verriegelungshebel gehalten ist (die den Hebel haltende Bedienerhand ist nicht dargestellt), dabei eine Drehpunkt-Ankervorrichtung des Deckels zur Horizontalen gesenkt ist, der Verriegelungshebel dabei in einer unverriegelten Stellung ist und der Rückstauklappenbetätigungshebel in einer eine Rückstauklappe freigebenden Stellung ist,
- Figur 5: eine perspektivische Seitenansicht von oben auf ein Rohrbehältergehäuse, wie es zusammen mit dem erfindungsgemäßen Deckelsystems zum Einsatz kommen kann,
- Figur 6: eine Seitenansicht des Deckelsystems aus Figur 4 und des Rohrbehältergehäuses aus Figur 5, in einem anfänglichen Zwischenstadium des Verschließvorgangs,
- Figur 7: die Ansicht aus Figur 6 mit dem Deckelsystem und dem Rohrbehältergehäuse mittig und vertikal geschnitten entlang der Längsachsen des Deckels und des Gehäuses,
- Figur 8: eine Ansicht im Querschnitt der Figur 7 eines durch das Deckelsystem und dem Rohrbehältergehäuse gebildeten Rohrbehälters, wobei der Verriegelungshebel in der verriegelten Stellung ist, die Deckelöffnung sitzfest verschlossen und der Rückstauklappenbetätigungshebel in einer freigebenden, geöffneten Stellung ist,
- Figur 9: eine Ansicht des Rohrbehälters aus Figur 8 in einer Perspektive von oben,
- Figur 10: eine perspektivische Ansicht von oben auf eine zweite Ausführungsform des erfindungsgemäßen Deckelsystems, hier in der beispielhaften Ausführung eines Deckelsystems für einen Rückstauverschluss. Das Deckelsystem hat in dieser Ausführungsform einen zusätzlichen, hier ebenfalls verriegelten Verriegelungshebel. Das Deckelsystem ist hier weiterhin zusammen mit einem Rohrbehältergehäuse abgebildet und formt somit einen weiteren, erfindungsgemäßen Rohrbehälter,

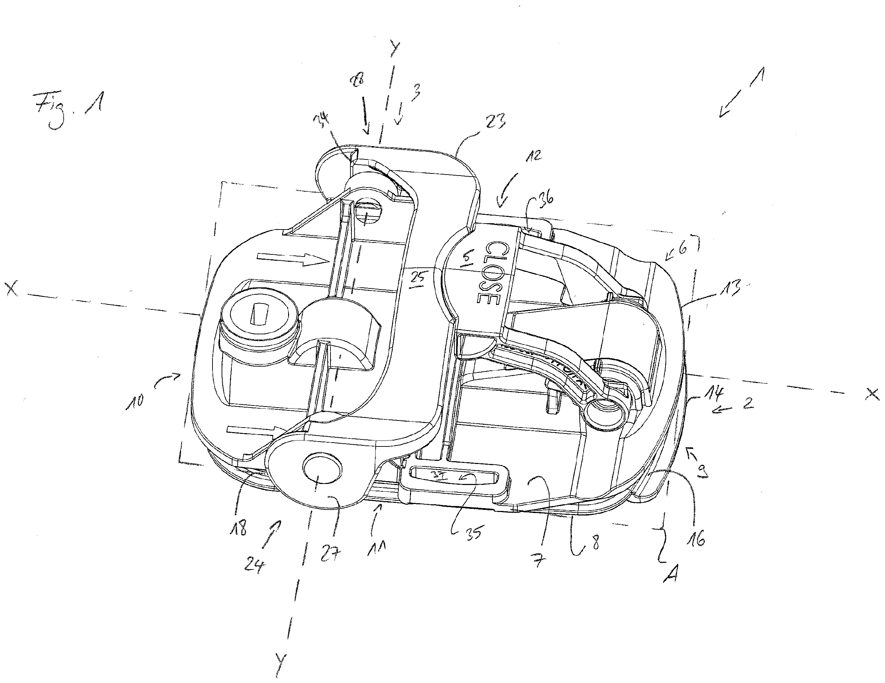

Wie in Figur 1 gut zu sehen ist, weist das Deckelsystem 1 einen Deckel 6, eine DrehpunktAnkervorrichtung 2, ein Verriegelungssystem 3, zwei Führungsaussparungen 35, 36 und einen Rückstauklappenbetätigungshebel 5 auf.

Der Deckel 6 ist hier ungefähr als ein flacher Quader ausgebildet. Der Quader hat hierbei zwei zueinander parallele, großflächigen Seitenwände, die in Figur 1 zu sehende Oberseite 7 und die nicht in dieser Figur zu sehenden Unterseite 8, sowie vier schmale Seitenwände, wobei davon zwei zueinander parallele, sich gegenüberliegende Seitenwände 9, 10 kürzer sind als die beiden anderen, ebenfalls zueinander parallelen und sich gegenüberliegenden Seitenwände 11, 12. Die Hauptausdehnung des Deckels 6 ist an der Oberseite 7, und liegt in einer Deckelebene A. Die beiden kurzen Seitenwände 9, 10 liegen entlang der Längsachse X des Deckels 6. Die kurze Seitenwand 9 zur Rechten in Figur 1 wird im Folgenden als Stirnseite bezeichnet und die andere kurze Seitenwand 10 als Rückseite. Das Deckelsystem 1 ist zu einer Ebene senkrecht zur Deckelebene A entlang der Längsachse X ungefähr spiegelsymmetrisch aufgebaut.

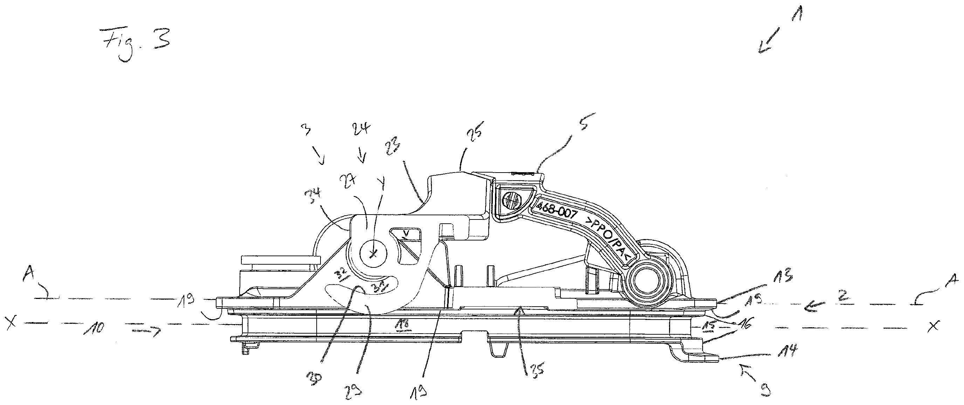

Die Drehpunkt-Ankervorrichtung 2 ist hier an der Stirnseite 9 des Deckels 6 angeordnet, wie in Figuren 1 bis 4 gut zu sehen ist. Die Drehpunkt-Ankervorrichtung 2 weist im Querschnitt senkrecht zur Deckeloberseite 7 und der Deckelebene A und dabei entlang der Längsachse X, ein U-förmiges Profil auf, wie am besten in Figur 3 und den Figuren 7 und 8 zu sehen ist.

Der der Oberseite 7 des Deckels zugewandte Schenkel 13 des U, im Folgenden oberer Schenkel des U genannt, liegt in etwa in der Deckelebene A. Der andere Schenkel 14 des U, im Folgenden unterer Schenkel des U genannt, liegt tiefer als die Deckelunterseite 8, steht also aus dieser nach unten und nach vorne hervor und ist hier leicht schräg zur Deckelebene A orientiert. Der untere Schenkel 14 des U ist in seinem Querschnitt in Form einer Nase ausgebildet und spreizt sich somit hin zur Öffnung 15 des U im Vergleich zum oberen Schenkel 13 leicht ab. Senkrecht zur Deckelunterseite 8 betrachtet erstreckt sich der untere Schenkel 14 des U über einen Großteil der Breite der Stirnseite 9.

Zwischen den beiden Schenkeln 13, 14 des U ist eine Stoßfläche 16 angeordnet, welche beim Verschließvorgang mit einem vorspringenden Anlagebereich 17 am Rohrbehältergehäuse stoßend in Kontakt kommt. In der Stoßfläche 16 verläuft zurückgesetzt eine Dichtungsnut 18, welche auch an allen anderen Seitenwänden 9-12 des Deckels vorhanden ist und den Deckel 6 seitlich umläuft. In die Dichtungsnut 18 ist eine hier nicht dargestellte, von den Seitenwänden 9-12 senkrecht nach außen wirkende und somit über die Dichtungsnut 18 hervorstehende Dichtung, beispielsweise eine Lippendichtung, eingebracht.

Der obere Schenkel 13 des U weist eine ebene, der Deckeloberseite 7 abgewandte Anlagefläche 19 auf, welche etwa parallel zur Deckelebene A verläuft und in derselben Ebene in seitlichen Anlageflächen entlang der längeren Seitenwände 11, 12 des Deckels sowie in entlang entsprechender Anlageflächen auf der Rückseite 10 des Deckels 6 fortgeführt wird. Diese Anlagefläche 19 kann mit einem passend ausgeführten Deckelsitz 49 einer Deckelöffnung 48 eines Rohrbehältergehäuses 22 sitzfest in Anlage gebracht werden.

Der Begriff "sitzfest" bezeichnet hier eine vorgesehene Endposition des Deckelsystems 1 am Rohrbehältergehäuse 22, also ein zusammen mit einem Rohrbehältergehäuse 22 angedachtes festes Anliegen des Deckels 6, hier ein vollflächiges Anliegen besagter Anlagefläche 19 des Deckels mit dem Deckelsitz 49 des Rohrbehältergehäuses, insbesondere ist hierbei das Deckelsystem 1 am Rohrbehältergehäuse 22 fest verriegelt.

Das Verriegelungssystem 3 ist auf der Deckeloberseite 7 angeordnet und weist, wie in Figur 1 gut zu sehen ist, einen Verriegelungshebel 23 und ein Schließsystem 24 auf.

Der Verriegelungshebel 23 ist entlang einer Rotationsachse Y leichtgängig rotierbar am Deckel 6 gelagert und überspannt den Deckel 6 zwischen den beiden längeren Seitenwänden 11,12. Der Verriegelungshebel 23 ist zwischen einer verriegelten Stellung und einer entriegelten Stellung hin und her rotierbar. In der verriegelten Stellung erstreckt sich der Verriegelungshebel 23 hin zum Deckelzentrum. Der Verriegelungshebel 23 ist bogenförmig ausgeführt. In seinem seitlichen Profil betrachtet entlang der Rotationsachse Y ist er in etwa stufenförmig ausgebildet.

Im verriegeltem Zustand wird ein größter Abstand zwischen Verriegelungshebel 23 und Deckeloberseite 7 in einem mittigen Bereich 25 des Verriegelungshebels 23 realisiert. Hierbei ist die im verriegelten Zustand der Deckeloberseite 7 zugewandte Unterseite 26 des Verriegelungshebels 23 bogenförmig ausgebildet. Betrachten man den Verriegelungshebel 23 im verriegelten Zustand senkrecht zur Deckeloberseite, 7 so ist das Profil des Hebels 23 ebenfalls etwa bogenförmig ausgeführt, so das in ein kürzester lichter Abstand zwischen Deckeloberseite 7 und dem mittigen Bereich 25 des Verriegelungshebels in der verriegelten, liegenden Stellung geringer ist als in der entriegelten, stehenden Stellung.

Der Verriegelungshebel 23 ist an den beiden langen Seitenwänden 11, 12 an dem Deckel 6 rotierbar gelagert. Die Rotationsachse Y verläuft hierbei senkrecht zur Längsachse X des Deckelsystems 1 und liegt dabei etwas parallel beabstandet zur Deckelebene A.

Das Schließsystem 24 umfasst zwei Schlösser 27, 28, wobei an jedem Ende des Verriegelungshebels 23 je ein Schloss 27, 28 angeordnet ist, wie in Figur 1 gut zu sehen ist. Jedes Schloss 27, 28 enthält einen Schnellverschluss.

Wie in der Querschnittsansicht von Figur 3 gut zu sehen ist, ist jedes Schloss 27, 28 zum Beispiel mit einer rotierbaren Klaue 29, welche eine rotierbare Nockeninnenfläche 30 aufweist, versehen. Die Nockeninnenfläche 30 ist in einem rotierenden Aufnahmekanal 31 des Schlosses 27, 28 angeordnet. Der Aufnahmekanal 31 weist hierbei eine Aufnahmeöffnung 32 zum Aufnehmen eines Rohrbehältergehäuseteils 33 auf.

Die Nockeninnenfläche 30 kann ihren Abstand zur Rotationsachse Y, wenn punktuell für einen fixen Bereich der Nockeninnenfläche 30 betrachtet, bei einer Rotation des Verriegelungshebels 23 von der entriegelten Stellung in die verriegelte Stellung so verringern, dass ein nicht mitrotierendes Rohrbehältergehäuseteil 33 gegriffen und bei der Rotation des Verriegelungshebels 23 in die verriegelte Stellung, der Deckel 6 über das Schloss 27, 28 zum Rohrbehältergehäuse 22 hingezogen wird. Dieser Vorgang passiert beim Verriegeln in beiden Schlössern 27,28 gleichzeitig. Bei einer Rotation des Verriegelungshebels 23 von der verriegelten hin zur entriegelten Stellung, wird der Deckel 6 durch eine Nockenausfläche 34 in jedem rotierenden Schloss 27, 28 gleichzeitig vom Rohrbehältergehäuse 22 abgedrückt.

Wie Figuren 1 und 3 zeigen, ist mit Blick auf die Deckeloberseite 7 die DrehpunktAnkervorrichtung 2 entlang der Längsachse X in der einen Deckelhälfte, an der Stirnseite 9 des Deckels 6, angeordnet, und die Rotationsachse Y in der anderen Hälfte des Deckels 6. Die beiden Schlösser 27, 28 des Schließsystems 24 bilden mit der Drehpunkt-Ankervorrichtung 2 die Ecken eines Dreiecks, wenn man von oben senkrecht auf die Deckelebene A bzw. auf die Deckeloberseite 7 blickt. Hier in diesem Fall ist dieses Dreieck gleichschenklig.

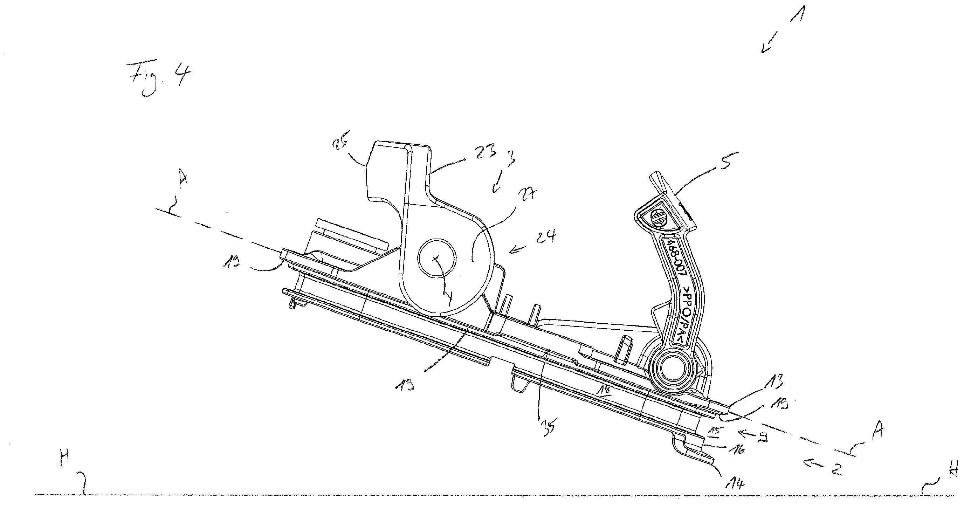

Der Massenschwerpunkt aller Teile des Deckelsystems 1 außer des Verriegelungshebels 23 liegt zwischen der Rotationsachse Y und der Drehpunkt-Ankervorrichtung 2, beispielsweise im Bereich des Zentrums des Deckels 6. Wie in Figur 4 zu sehen ist, hält man das Deckelsystem 1 ausschließlich an dem Verriegelungshebel 23, beispielsweise mit nur einer Hand, orientiert sich der Deckel 6 aufgrund der Lage des Massenschwerpunktes automatisch in eine Position, in welcher die Stirnseite 9 mit der Drehpunkt-Ankervorrichtung 2 zur Horizontalen H nach unten abgesenkt und die Rückseite 10 entsprechend angehoben ist.

Wie eine Zusammenschau der Figur 3 mit der Figur 4 weiterhin ergibt, führt das automatische Rotieren des Deckels 6 um den Verriegelungshebel 23 beim freien Halten des Deckelsystems 1 am Verriegelungshebel 23 auch dazu, dass die Aufnahmeöffnungen 32 der beiden Schösser 27, 28 vertikal nach unten zeigen und somit in einem direkten Weg von der Deckelunterseite 8 her für ein Rohrbehältergehäuseteil 33 zugänglich sind.

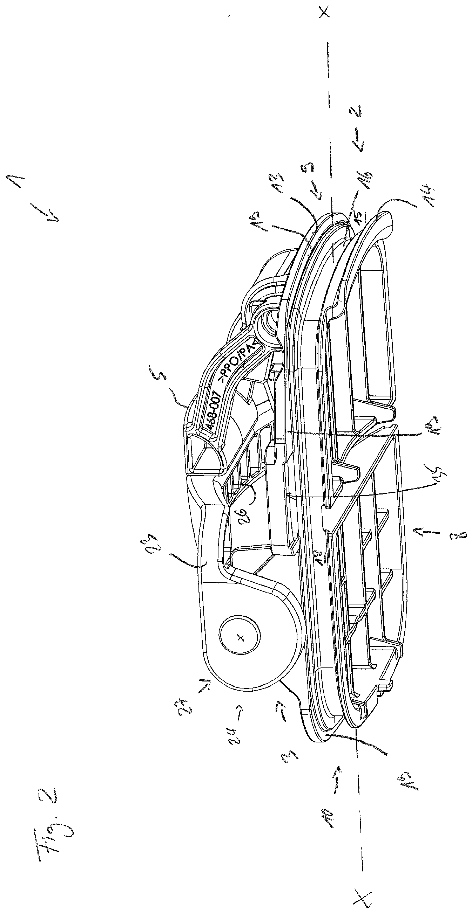

Wie aus den Figuren 1 und 2 hervorgeht, weist der Deckel an jeder seiner beiden langen Seitenwände 11, 12, auf gleicher Höhe entlang der Längsachse X, je eine ösenförmige Führungsaussparung 35, 36 auf. Jede Führungsaussparung 35, 36 hat hierbei ein Durchgangsloch 36, 37 zur Aufnahme eines rohrbehältergehäuseseitigen Führungszapfens 39, 40. Die beiden Durchgangslöcher 36, 37 sind hierbei im Querschnitt etwa rechteckig mit Blick auf die Deckelebene A betrachtet ausgebildet, und die zum Deckelzentrum entfernteste Seite des Durchgangslochquerschnitts ist dabei torbogenförmig ausgeführt.

Wie Figuren 1 bis 4 zeigen, ist der Rückstauklappenbetätigungshebel 5 in der Nähe der Stirnseite 9 angeordnet, und zwar in der Deckelhälfte, in der sich nicht die Rotationsachse Y des Verriegelungshebels 23 befindet. Dieser Hebel 5 erlaubt beispielsweise eine im Rohrbehältergehäuse 22 befindliche Rückstauklappe (nicht dargestellt) manuell zu verschließen. In der in den Figuren 1 bis 3 gezeigten Stellung des Rückstauklappenbetätigungshebels 5 ist der Hebel in der manuell verschlossenen Stellung und in Figur 4 in der unverschlossenen, die Rückstauklappe freigebenden Stellung.

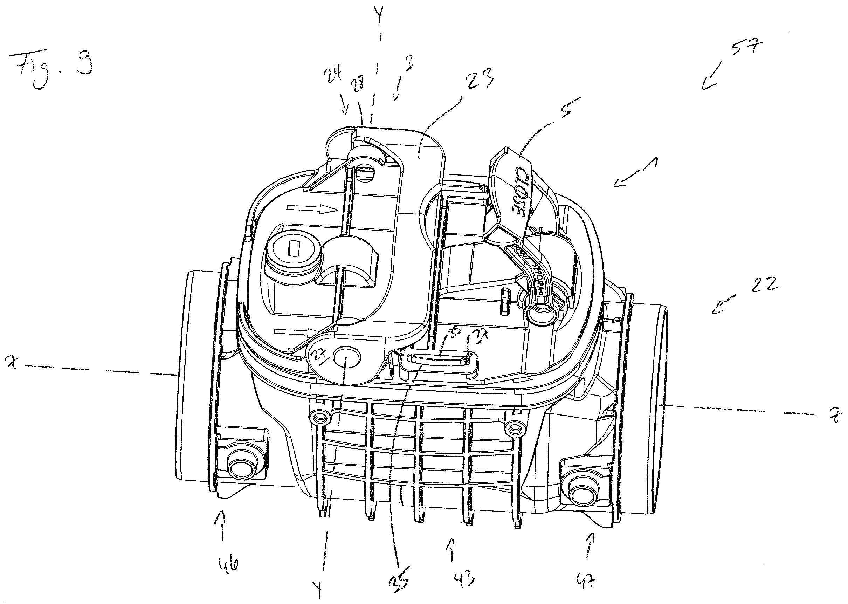

Wie die Zusammenschau der Figuren 1 und 9 zeigt, ist der Verriegelungshebel 23 in der verriegelten Stellung mit einem Abschnitt 41 im mittigen Bereich 25 so unterbissig zum Rückstauklappenbetätigungshebel 5 angeordnet, dass ein Entriegeln des Verriegelungshebels 23 ein Betätigen und somit ein Aufheben der manuellen Schließsituation der Rückstauklappe erfordert und in dieser Ausführung auch zumindest teilweise bedingt.

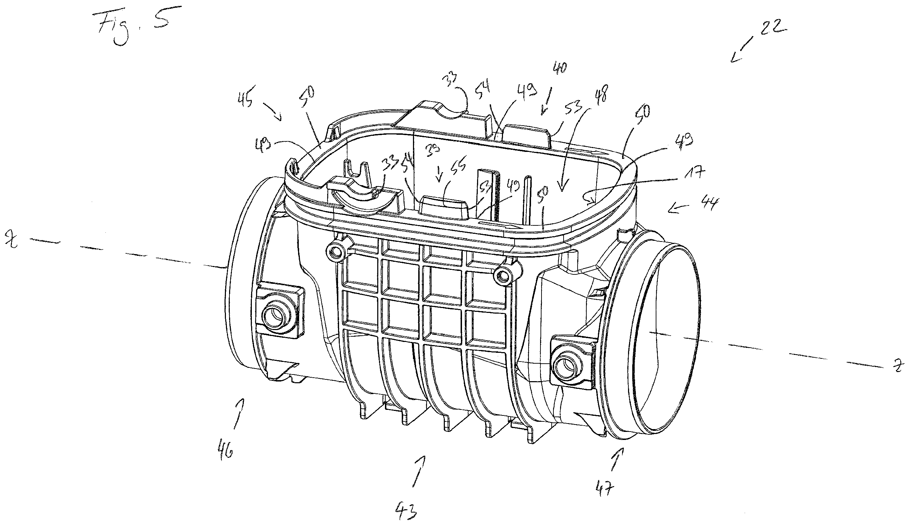

Figur 5 zeigt ein sich entlang einer Längsachse Z erstreckendes Rohrbehältergehäuse 22, welches ein kastenförmiges Grundgehäuse 43 mit rechteckigem Grundriss aufweist. An zwei gegenüberliegenden, schmalen Seitenwänden 44, 45 des Grundgehäuses 43 sind zueinander fluchten angeordneten Rohrstutzen 46, 47 angeordnet, ein Einlaufrohrstutzen 46 und ein Auslaufrohrstutzen 47. Die beiden Rohrstutzen 46, 47 sind mit dem Grundgehäuse 43 einstückig verbunden. Abwasser kann hierbei von einem Rohrstutzen 46, durch das Grundgehäuse 43 hin zum anderen Rohrstutzen 47 fließen. Das Grundgehäuse weist auf seiner Oberseite die Deckelöffnung 48 auf, welche in Ihrer Form etwa den Ausmaßen des Deckels 6 in der Deckelebene A entspricht, dabei aber in Ihrer flächigen Ausdehnung etwas geringer gehalten ist, so dass der Deckel 6 aufsitzen kann. Die Deckelöffnung 48 wird von dem die Deckelöffnung 48 umlaufenden Deckelsitz 49, welcher eine in einer Ebene liegende und teils unterbrochene Anschlagsfläche 50 umfasst, umrandet.

Aus der Anschlagsfläche 50 des Deckelsitzes 49 senkrecht hervorstehend, weist das Grundgehäuse an seinen beiden längeren Seitenwänden etwa mittig insgesamt zwei Führungszapfen 39, 40 auf, welche so dimensioniert sind, dass Sie in die Führungsaussparungen 35, 36 des Deckelsystems passen.

Auf seiner im verschlossenen Zustand der Drehpunkt-Ankervorrichtung 2 zugewandten Seite 53 und auf seiner dem Schließsystem zugewandten Seite 54 sowie auf seiner der Deckelöffnung abgewandten Seite 55, verjüngt sich jeder Führungszapfen 39, 40 mit zunehmender Entfernung zum Deckelsitz 49 über fasenartige Steigungen. Betrachtet man einen Führungszapfen 39, 40 senkrecht zum Deckelsitz 49, so ist dessen Querschnitt etwa gleich dem Querschnitt des Durchgangslochs 37, 38 der Führungsaussparung 35, 36 des Deckelsystems 1. Die zur Deckelöffnung 48 entfernteste Seite des Querschnitts ist dabei ebenfalls torbogenförmig.

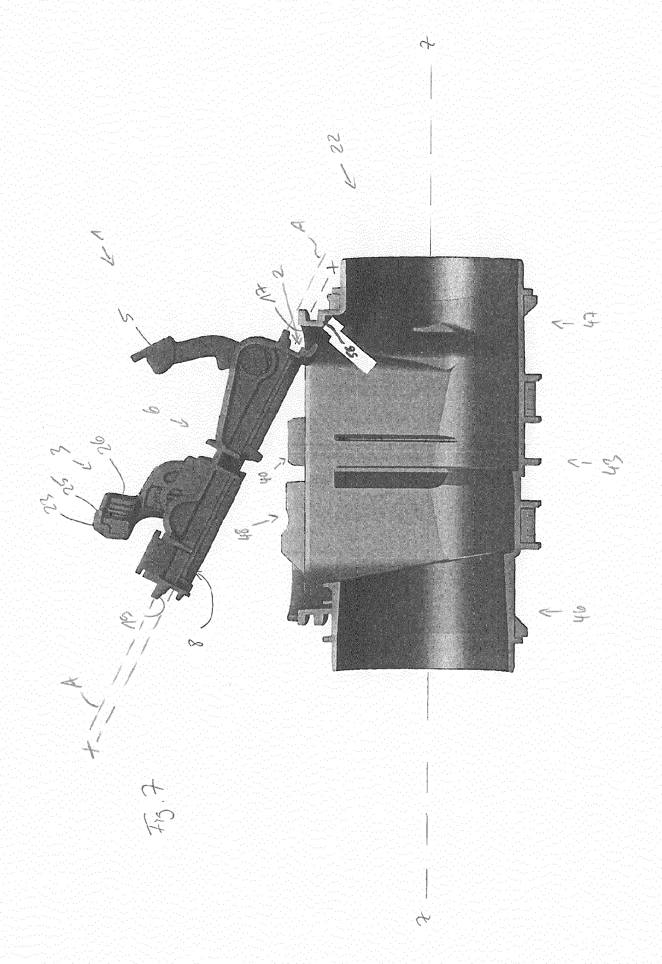

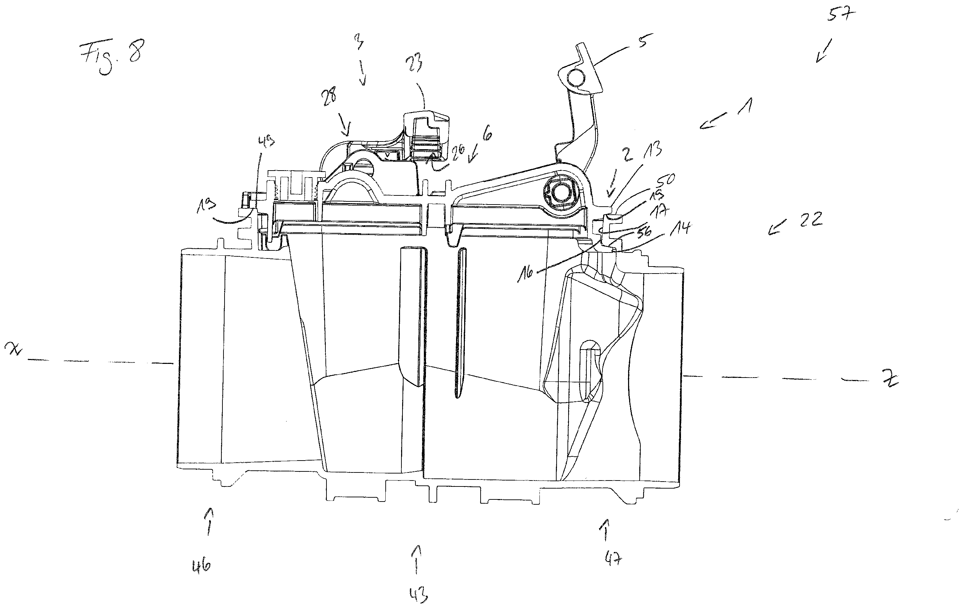

Wie in den Querschnittsansichten der Figur 7 und 8 zu entnehmen ist, weist das Grundgehäuse 43 unterhalb des Deckelsitzes 49 den vorspringenden Anlagebereich 17 für die DrehpunktAnkervorrichtung 2 des Deckelsystems 1 auf. Der Anlagebereich 17 erstreckt sich hierbei senkrecht zur Deckelöffnung 48 und zum Deckelsitz 49. Wie in Figur 7 weiterhin zu sehen ist, weist das Grundgehäuse 43 weiterhin eine zum Anlagebereich 17 zurückgezogene Anlagefläche 56 auf, welche bei dem sitzfesten Deckelsystem 1 mit dem unteren Schenkel 14 des U in Anlage ist. Selbiges gilt für den oberen Schenkel 13 des U, der bei einem sitzfesten Deckelsystem 1 über die Anlagefläche 19 mit einem Teil des Deckelsitzes 49 in Anlage ist.

Figur 9 zeigt einen erfindungsgemäßen Rohrbehälter 57, hier einen Rückstauverschluss, mit dem Verriegelungshebel 23 in der verriegelten Position und dem Rückstauklappenbetätigungshebel 5 in der freigebenden Position. Das Deckelsystem 1 verschließt hierbei die Deckelöffnung 48 sitzfest und zudem auch flüssigkeitsdicht. In dieser Ausführungsform ist die Deckelöffnung 48 flüssigkeitsdicht bis zum einem Flüssigkeitsüberdruck von mindestens 0,5 bar.

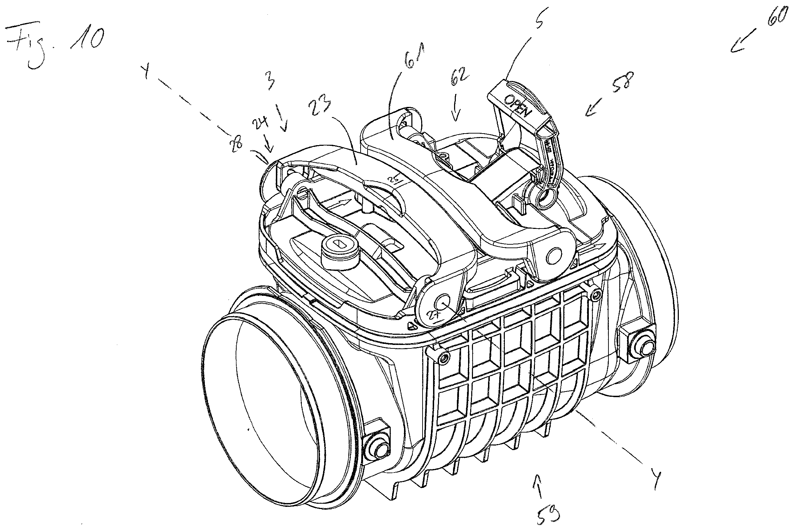

Figur 10 zeigt eine zweite Ausführungsform eines erfindungsgemäßen Deckelsystems 58 sowie ein zugehöriges Rohrbehältergehäuse 59 und somit auch eine zweite Ausführungsform eines erfindungsgemäßen Rohrbehälters 60, hier eines Rückstauverschlusses. Dieses Deckelsystem 58 hat eine größere Ausdehnung in der Deckelebene als das Deckelsystem 1 der ersten Ausführungsform. Entsprechend kann das zugehörige Rohrbehältergehäuse 59 mehr Volumen als das der ersten Ausführungsform fassen. Das Rohrbehältergehäuse 59 enthält weiterhin alle Merkmale des Rohrbehältergehäuses 22.

Das Deckelsystem 58 dieser Ausführungsform funktioniert prinzipiell wie das der ersten Ausführungsform. Gleiche Merkmale sind deswegen mit bereits aus der ersten Ausführungsform bekannten Referenzzeichen versehen.

Im Folgenden wird deswegen lediglich auf Unterschiede eingegangen.

Das Deckelsystem 58 dieser Ausführungsform unterscheidet sich zur ersten Ausführungsform dahingehend, dass es einen zweiten Verriegelungshebel 61 aufweist. Der zweite Verriegelungshebel 61 ist zwischen dem ersten Verriegelungshebel 3 und der DrehpunktAnkervorrichtung 2 an der Deckeloberseite 62 angeordnet. Lediglich um ein flüssigkeitsdichtes Verschließen bei stärkeren Überdrucksituationen, wie beispielsweise bei 0,5 bar Flüssigkeitsüberdruck zu gewährleisten, weist dieses Deckelsystem 58 den zweiten Verriegelungshebel 61 auf. Der zweite Verriegelungshebel 61 ist hierbei von seiner Form und seinem Schließ-Wirkprinzip ähnlich dem ersten Verriegelungshebel 23 ausgeführt.

Weiterhin ist der Rückstauklappenbetätigungshebel 5 in dieser Ausführungsform zusammenwirkend mit dem zweiten Verriegelungshebel 61 positioniert. Auch erfordert und bedingt nunmehr ein Entriegeln des zweiten Verriegelungshebels 61 ein Betätigen des Rückstauklappenbetätigungshebels 5 in derselben Weise wie zur ersten Ausführungsform erläutert.

Ein sitzfestes Verschließen des Deckelsystems 58 ist bereits mit dem ersten Verriegelungshebel 23 gewährleistest, ebenso wie ein flüssigkeitsdichtes Verschließen, beispielsweise bis 0,1 bar Flüssigkeitsüberdruck.

Vorteilhafterweise ist der zweite Verriegelungshebel 61 so ausgeführt, dass er ohne Krafteinwirkung in seiner jeweiligen Lage verbleibt, also beispielsweise in der entriegelten Stellung, in welcher die Aufnahmeöffnungen der beiden den zweiten Verriegelungshebel 61 zugehörigen Schlösser je ein weiteres Rohrbehältergehäuseteil aufnehmen können.

Zur besseren Verdeutlichung wird nachfolgend die Funktionsweise der in den Figuren gezeigten Ausführungsformen kurz erläutert.

Für ein sitzfestes Verschließen des Deckelsystems 1, bringt der Bediener vorbereitend den Rückstauklappenbetätigunghebel 5 in eine stehende Stellung, wie sie beispielsweise in Figur 4 gezeigt ist. Der Rückstauklappenbetätigungshebel 5 verbleibt in dieser Stellung, bis er händisch wieder in eine andere bewegt wird. Wegen der unterbissigen Anordnung des Verriegelungshebels 23 zum Rückstauklappenbetätigungshebel 5 kann der Bediener auch direkt den Verriegelungshebel 23 an dem dafür vorgesehenen, gewölbten Mittelbereich 25 von der Seite der Rotationsachse Y kommend mit nur einer Hand greifen und beim Rotieren des Verriegelungshebels 23 den Rückstauklappenbetätigungshebel 5 mit anheben. In Figur 1 entspricht diese Greifrichtung den auf der Deckeloberseite 7 gezeigten Pfeilen.

Durch die spezielle Lage des Massenschwerpunktes der Nicht-Verriegelungshebel-Teile des Deckelsystems 1 rotiert bei diesem greifenden Anheben des Deckelsystems 1 der Verriegelungshebel 23 automatisch relativ zum Deckel 6 um die Rotationsachse Y in eine wie in Figur 4 gezeigte, zur Horizontalen H mit der Drehpunkt-Ankervorrichtung 2 schräg nach unten absenkten Position des Deckels 6. Hierbei drehen sich die beiden Schlösser 27,28 ebenfalls relativ zum Deckel 6, bis deren Aufnahmeöffnungen 32 ungefähr vertikal nach unten zeigen und ein der Klaue 29 angepasstes Rohrbehältergehäuseteil 33 ungefähr von vertikal unten kommend in die Aufnahmeöffnung 32 eingeführt werden kann.

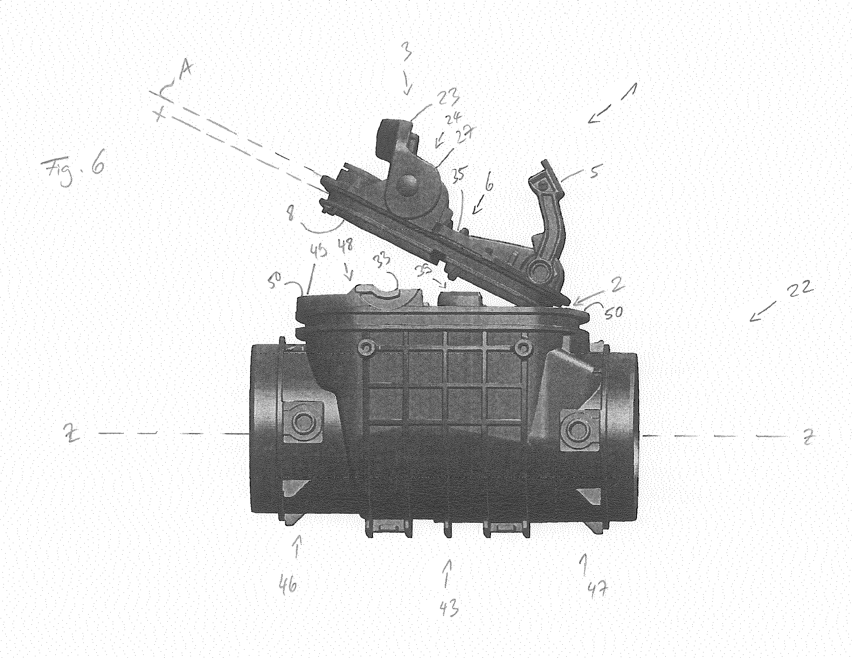

Das Deckelsystem 1 wird in der wie in Figur 4 gezeigten, schrägen Orientierung einhändig am Verriegelungshebel 23 gehalten und über die Deckelöffnung 48 des Rohrbehältergehäuses 22 bewegt. Anschließend wird die Drehpunkt-Ankervorrichtung 2, wie in den Figuren 6 und 7 gezeigt, mit dem behälterseiten Anlagebereich 17 stoßend und zuerst schräg in Kontakt gebracht. Hierbei wird die Stoßfläche 16 zuerst schräg auf den Anlagebereich 17 gedrückt und die Anlagefläche 19 des oberen Schenkels 13 des U liegt dabei ebenfalls schräg auf einem Teil des Deckelsitzes 49 auf. Der untere Schenkel 14 des U greift dabei bereits mit seiner Nase etwas unterhalb der vorspringenen Anlagefläche 19, hinterschnittig in das Rohrbehältergehäuse 22 ein und kontaktiert dabei zuerst noch schräg die zum vorspringenden Anlagebereich 19 zurückgezogene Anlagefläche 56.

Hierdurch wird ein Drehpunkt um den Kontaktbereich zwischen Deckel 6 und Rohrbehältergehäuse 22, insbesondere um den Kontaktbereich zwischen Anlagebereich 17 und Stoßfläche 16, zwischen oberen U-Schenkel 13 und Deckelsitz 49 sowie zwischen unterem U-Schenkel 14 und zurückgezogener Anlagefläche 56, geschaffen. Anschließend wird der Deckel 6 über den Verriegelungshebel 23 und um den gebildeten Drehpunkt auf die Deckelöffnung 48 gedrückt. Hierbei finden sich die angefasten Führungszapfen 39, 40 des Rohrbehältergehäuses 22 in die zugehörigen, ösenförmigen Führungsaussparungen 35, 36 und positionieren den Deckel 6 seitlich während seiner Bewegung hin zur Deckelöffnung 48 und auch später. Kurz danach werden auch die beiden Rohrbehältergehäusteile 33 in die entsprechenden Aufnahmeöffnungen 32 der Schlösser 27, 28 eingeführt. Durch die angefasten Führungszapfen 39, 40 wird der Deckel 6 bei seiner Senkbewegung hin zur Deckelöffnung 48 ebenfalls dabei unterstützt, weiterhin gegen den Anlagebereich 17 zu stoßen.

Anschließend wird auch der seitliche sowie der rückwärtige Teil der Anlagefläche 19 vollständig mit dem Deckelsitz 49 in Anlage gebracht, wie es in Figur 8 zu sehen ist. Nun wird der Verriegelungshebel 23 von seiner entriegelten, stehenden Stellung in Richtung der DrehpunktAnkervorrichtung 2 in seine liegende, verriegelte Stellung rotiert, und dabei der Deckel 6 durch die Schlösser 27, 28 zum Rohrbehältergehäuse 22 hingezogen und die entsprechende Deckelanlagefläche 19 auf den Deckelsitz 49 bzw. die Anschlagsfläche 50 gedrückt. Die Rotation des Verriegelungshebels 23 hin zur Drehpunktankervorrichtung 2 unterstützt dabei, dass der Deckel 6, solange er noch nicht vollständig verriegelt ist, vorteilhafterweise gegen den Anlagebereich 17 gedrückt wird. Gleichzeitig wird der Deckel 6, durch die Form des Verriegelungshebels 23 bedingt, auch gegen die Deckelöffnung 48 gedrückt.

Das Deckelsystem 1 verschließt nun sitzfest die Deckelöffnung.

Durch das radiale Anschmiegen der sich in der Dichtungsnut 18 befindlichen Dichtung an die Rohrbehältergehäuseinnenwandung bei der Deckelöffnung 48 ist die Deckelöffnung 48 auch flüssigkeitsdicht, hier bis mindestens 0,5 bar Überdruck, verschlossen.

Bei einem gewünschten Öffnen der Deckelöffnung 48, kann das Deckelsystem 1 ebenfalls wieder nur am Verriegelungshebel 23 gegriffen und in die unverriegelte Stellung rotiert werden. Die beiden Schlösser 27,28 geben dadurch die gegriffenen Rohrbehältergehäuseteile 33 frei. Gleichzeitig wird der Deckel 6 durch die rotierenden Nockenaußenflächen 34 der Schlösser 27, 28 vom Rohrbehältergehäuse 22 abgedrückt. Der Deckel 6 kann nun vollständig von der Deckelöffung 48 abgehoben werden. Das U-Profil der Drehpunkt-Ankervorrichtung 2 wird beim Entriegeln durch das Rotieren des Verriegelungshebels 23 weg von der DrehpunktAnkervorrichtung 2 etwas vom Anlagebereich 17 etwas schräg zurückgezogen, so dass der Hinterschnitt des unteren U-Schenkels 14 einem Abheben des Deckels 6 nicht mehr entgegensteht. Das Ziehen an dem Verriegelungshebel 23, welches bei einer angehobenen Hebelstellung auch weg von der Deckelöffnung 48 drückt, unterstützt dabei zusätzlichen den Öffnungsvorgang.

Die Funktionsweise der zweiten Ausführungsform ist sehr ähnlich zur der der ersten Ausführungsform, und wird daher nur kurz umrissen.

Zum Verschließen der Deckelöffnung werden hierbei zuerst der zweite Verriegelungshebel 61 zusammen mit dem Rückstauklappenbetätigungshebel 5 in eine stehende Position gebracht. Somit ist der zweite Verriegelungshebel 61 in einer entriegelten Position. Beide Hebel 61, 5 verbleiben in dieser Position, bis sie wieder manuell betätigt werden.

Anschließend wird das Deckelsystem 58 wie zur ersten Ausführungsform beschrieben, alleinig durch Halten und Manipulieren des ersten Verriegelungshebels 23 auf den Deckelsitz aufgesetzt und der erste Verriegelungshebel 23 dann verriegelt. Die Deckelöffnung in dieser zweiten Ausführungsform ist nun ebenfalls sitzfest verschlossen. Bereits das Verriegeln des ersten Verriegelungshebels 23 stellt ein flüssigkeitsdichtes Verschließen der Deckelöffnung bis mindestens 0,1 bar sicher.

Damit das Deckelsystem 58 auch bei größeren Überdruckanforderungen flüssigkeitsdicht ist, wird vorgeschlagen, dass zusätzlich der zweite Verriegelungshebel 61 in seine verriegelte Stellung rotiert wird. Jetzt ist das Deckelsystem 58 beispielsweise bis zu einem Flüssigkeitsüberdruck von mindestens 0,5 bar dicht.

Bei einem Öffnen dieser Ausführungsform, wird zuerst der zweite Verriegelungshebel 61 entriegelt. Das Deckelsystem 58 ist bei entriegeltem zweiten Verriegelungshebel 61 immer noch sitzfest verschlossen. Nun wird, wie in oben beschriebener Weise, der erste Verriegelungshebel 23 gegriffen und der Deckel vom Rohrbehältergehäuse 59 gelöst und abgehoben.

Ein derartiges Deckelsystem mit mehr als zwei derartigen Verriegelungshebeln, zum Beispiel mit drei Verriegelungshebeln, ist ebenfalls möglich.

Wie oben erläutert wurde, erlaubt es die vorliegende Erfindung, Deckelsysteme 1, 58 für abwasserführende Rohrbehältergehäuse 22, 59 mit nur einer Hand sitzfest zu verschließen und beispielsweise aus diesem sitzfesten Verschluss wieder zu Öffnen.

## Patentansprüche

1. Deckelsystem (1, 58) zum werkzeuglosen, wiederholbaren Verschließen und Öffnen eines Rohrbehältergehäuses (22, 59) für Abwässer, insbesondere eines Rückstauverschlussgehäuses, mit
einem Deckel (6), welcher eine Deckelöffnung (48) eines Rohrbehältergehäuses (22, 59) durch ein Anlegen des Deckels (6) an einen Deckelsitz (49) der Deckelöffnung (48) sitzfest verschließen kann, und
einer am Deckel (6) angeordneten Drehpunkt-Ankervorrichtung (2), welche den Deckel (6) an einem Anlagebereich (17) eines Rohrbehältergehäuses (22, 59) positionieren und an diesem Anlagebereich (17) und um diesen Anlagebereich (17) drehbar verankern kann, und
einem am Deckel (6) angeordneten und zur Drehpunkt-Ankervorrichtung (2) beabstandeten Verriegelungssystem (3), aufweisend einen rotierbaren Verriegelungshebel (23) und ein mit dem Verriegelungshebel in Wirkung stehendes Schließsystem (24) zum Verriegeln und Entriegeln des Deckels (6) an dem Rohrbehältergehäuse (22, 59), wobei der Verriegelungshebel (23) zwischen einer verriegelten Stellung und einer entriegelten Stellung hin und her rotierbar ist,
**dadurch gekennzeichnet, dass**
das Verriegelungssystem (3) ein sitzfestes Verschließen der Deckelöffnung (48) des Rohrbehältergehäuses (22, 59) durch ein Halten und Manipulieren des Deckelsystems (1, 58) alleinig durch den Verriegelungshebel (23) ermöglicht.

2. Deckelsystem (1, 58) nach Anspruch 1, **dadurch gekennzeichnet, dass**
die Drehpunkt-Ankervorrichtung (2) den Deckel (6) durch ein Andrücken gegen einen Anlagebereich (17) eines Rohrbehältergehäuses (22, 59), insbesondere gegen einen Anlagebereich (17) innerhalb der Deckelöffnung (48) des Rohrbehältergehäuses (22, 59), an dem Rohrbehältergehäuse (22, 59) positionieren und an diesem Anlagebereich (17) und um diesen Anlagebereich (17) drehbar verankern kann, und
das Verriegelungssystem (3) derart eingerichtet ist, dass eine drückende Rotation des Verriegelungshebels (23) hin zur Drehpunkt-Ankervorrichtung (2) den Verriegelungshebel (23) in die verriegelte Stellung bewegt und eine ziehende Rotation des Verriegelungshebels (23) weg von der Drehpunkt-Ankervorrichtung (2) den Verriegelungshebel (23) in die entriegelte Stellung bewegt.

3. Deckelsystem (1, 58) nach einem der vorherigen Ansprüche, **dadurch gekennzeichnet, dass**
das Schließsystem (24) an zwei gegenüberliegenden Seiten (11, 12) des Deckels (6) je ein Schloss (27, 28) aufweist und der Verriegelungshebel (23) die Oberseite (7) des Deckels (6) von dem einen Schloss (27) hin zu dem anderen Schloss (28) überspannt.

4. Deckelsystem (1, 58) nach einem der vorherigen Ansprüche, **dadurch gekennzeichnet, dass**
der Verriegelungshebel (23) den Deckel (6) im verriegelten Zustand bogenförmig überspannt, so dass ein größter Abstand zwischen Deckel (6) und verriegeltem Verriegelungshebel (23) in einem mittigen Bereich des Deckels realisiert wird,
und/oder
sich der Verriegelungshebel (23) in verriegelter Stellung hin zum Deckelzentrum erstreckt.

5. Deckelsystem (1, 58) nach einem der vorherigen Ansprüche, **dadurch gekennzeichnet, dass**
ein lichter Abstand zwischen Verriegelungshebel (23) und Deckel (6) gebildet ist, und der lichte Abstand in der entriegelten Stellung größer ist als in der verriegelten Stellung.

6. Deckelsystem nach einem der vorherigen Ansprüche, **dadurch gekennzeichnet, dass**
die Drehpunkt-Ankervorrichtung (2) an einer schmalen Stirnseite (9) des Deckels (6) angeordnet ist,
und /oder
die Drehpunkt-Ankervorrichtung (2) eine Hervorstehung (14), insbesondere einen nasenartigen Vorsprung, aufweist, welche in die Deckelöffnung (48) eines Rohrbehältergehäuses (22, 59) eintauchen und den Deckel (6) in dem Rohrbehältergehäuse (22, 59) in Richtung der Deckelöffnung (48) hinterschnittig verankern kann.

7. Deckelsystem (1, 58) nach einem der vorherigen Ansprüche, **dadurch gekennzeichnet, dass**
die Drehpunkt-Ankervorrichtung (2) ein im Querschnitt U-förmiges Profil aufweist, welches zwischen den Schenkeln (13, 14) des U einen rohrbehältergehäuseseitig vorspringenden Anlagebereich (17) halten kann, insbesondere liegt ein Schenkel (13) des U etwa in der Ebene (A) der Hauptausdehnung des Deckels (6) und die Öffnung (15) des U zeigt dabei nach außen.

8. Deckelsystem nach einem der vorherigen Ansprüche, **dadurch gekennzeichnet, dass** die Drehpunkt-Ankervorrichtung (2) in der einen Hälfte des Deckels (6) angeordnet ist, insbesondere an einem Ende des Deckels (6), und die Rotationsachse (Y) des Verriegelungshebels (23) in der anderen Hälfte des Deckels (6) angeordnet ist.

9. Deckelsystem (1, 58) nach einem der vorherigen Ansprüche, **dadurch gekennzeichnet, dass**
der gemeinsame Massenschwerpunkt der Nicht-Verriegelungshebel-Teile des Deckelsystems (1, 58) zwischen der Drehpunkt-Ankervorrichtung (2) und der Rotationsachse (Y) des Verriegelungshebels (23) liegt, so dass sich der Deckel (6) bei einem Halten des Deckelsystems (1, 58) lediglich an dem Verriegelungshebel (23), automatisch mit der Drehpunkt-Ankervorrichtung (2) voraus absenkt.

10. Deckelsystem (1, 58) nach einem der vorherigen Ansprüche, **dadurch gekennzeichnet, dass**
das Schließsystem (24) mit dem Verriegelungshebel (23) rotiert und derart ausgeführt ist, dass sich beim Halten des Deckelsystems (1, 58) lediglich am Verriegelungshebel (23), das Schließsystem (24) automatisch relativ zum Deckel (6) in die entriegelte Stellung begibt, wobei in der entriegelten Stellung eine Aufnahmeöffnung (32) des Schließsystems (24) zum Aufnehmen eines Rohrbehältergehäuseteils (33) von der dem Rohrbehältergehäuse (22, 59) zugewandten Unterseite (8) des Deckels (6) zugänglich ist.

11. Deckelsystem (1) nach einem der vorherigen Ansprüche, wobei das Deckelsystem (1) zum werkzeuglosen, wiederholbaren Verschließen eines Rückstauverschlussgehäuses ist, **dadurch gekennzeichnet, dass**
das Deckelsystem (1) einen am Deckel (6) angeordneten Rückstauklappenbetätigungshebel (5) aufweist, wobei der Rückstauklappenbetätigungshebel (5) so zum Verriegelungshebel (23) angeordnet ist, dass ein Entriegeln des Verriegelungshebels (23) ein vorheriges Betätigen des Rückstauklappenbetätigungshebels (5) erfordert.

12. Deckelsystem (1,58) nach einem der vorherigen Ansprüche, **dadurch gekennzeichnet, dass**
der Deckel (6) zwischen der Drehpunkt-Ankervorrichtung (2) und dem Schließsystem (24) mindestens eine seitliche Führungsaussparung (35, 36), insbesondere eine ösenförmige Führungsaussparung, zur Aufnahme mindestens eines rohrbehältergehäuseseitigen Führungszapfens (39,40) aufweist, um den Deckel (6) bei einem Drehen des Deckels (6) um den Anlagebereich (17) in Richtung der Deckelöffnung (48) führen zu können.

13. Deckelsystem (1, 58) nach einem der vorherigen Ansprüche, **dadurch gekennzeichnet, dass**
das Deckelsystem (1, 58) mit dem Verriegelungshebel (23) in der verriegelten Stellung die Deckelöffnung vollständig entlang des Deckelsitzes flüßigkeitsdicht, insbesondere bis mindestens 0,1 bar Flüssigkeitsüberdruck, besonders bis mindestens 0,5 bar Flüssigkeitsüberdruck, verschließen kann.

14. Rohrbehälter (57, 60) für Abwässer, insbesondere Rückstauverschluss, mit
einem Rohrbehältergehäuse (22, 59) mit einer Deckelöffnung (48), und
einem Deckelsystem (1, 58) gemäß einem der vorherigen Ansprüche.

15. Rohrbehälter (57,60) nach Anspruch 14 mit einem Deckelsystem (1, 58) nach Anspruch 12, **dadurch gekennzeichnet, dass**
das Rohrbehältergehäuse (22, 59) entsprechend mindestens einen Führungszapfen (39, 40) aufweist, welcher von der mindestens einen Führungsaussparung (35, 36) aufgenommen werden kann, insbesondere sich dabei der mindestens eine Führungszapfen (39, 40) auf seiner im verschlossenen Zustand der Drehpunkt-Ankervorrichtung (2) zugewandten Seite (53) und/oder auf seiner dem Schließsystem zugewandten Seite (54) und/oder auf seiner der Deckelöffnung (55) abgewandten Seite, mit zunehmender Entfernung zum Rohrbehältergehäuse (22, 59) verjüngt, besonders sich dabei in einer kurvigen und/oder angefasten Kontur stetig verjüngt.

## Claims

1. Cover system (1, 58) for tool-free, repeatable closing and opening of a tubular container housing (22, 59) for wastewater, in particular a backflow stop housing, comprising
a cover (6) which can tightly close a cover opening (48) of a tubular container housing (22, 59) by placing the cover (6) on a cover seat (49) of the cover opening (48), and
a pivot-point anchoring device (2) which is arranged on the cover (6) and which can position the cover (6) on a contact region (17) of a tubular container housing (22, 59) and can anchor said cover on this contact region (17) and so as to be rotatable about this contact region (17),
a locking system (3) which is arranged on the cover (6) and spaced apart from the pivot-point anchoring device (2), having a rotatable locking lever (23) and a closing system (24) which interacts with the locking lever for locking and unlocking the cover (6) on the tubular container housing (22, 59), the locking lever (23) being rotatable back and forth between a locked position and an unlocked position,
**characterised in that**
the locking system (3) makes it possible to tightly close the cover opening (48) of the tubular container housing (22, 59) by holding and manipulating the cover system (1, 58) solely by means of the locking lever (23).

2. Cover system (1, 58) according to claim 1, **characterised in that**
the pivot-point anchoring device (2) can position the cover (6) on the tubular container housing (22, 59) by pressing against a contact region (17) of a tubular container housing (22, 59), in particular against a contact region (17) inside the cover opening (48) of the tubular container housing (22, 59), and can anchor said cover on this contact region (17) and so as to be rotatable about this contact region (17), and
the locking system (3) is designed such that a pushing rotation of the locking lever (23) towards the pivot-point anchoring device (2) moves the locking lever (23) into the locked position, and a pulling rotation of the locking lever (23) away from the pivot-point anchoring device (2) moves the locking lever (23) to the unlocked position.

3. Cover system (1, 58) according to any of the preceding claims, **characterised in that** the closing system (24) has a lock (27, 28) on each of two opposite sides (11, 12) of the cover (6), and the locking lever (23) spans the upper face (7) of the cover (6) from the one lock (27) to the other lock (28).

4. Cover system (1, 58) according to any of the preceding claims, **characterised in that**
the locking lever (23) spans the cover (6) in an arcuate manner in the locked state, such that a greatest distance between the cover (6) and the locked locking lever (23) is in a central region of the cover,
and/or
the locking lever (23) extends towards the centre of the cover in the locked position.

5. Cover system (1, 58) according to any of the preceding claims, **characterised in that** a clear distance is formed between the locking lever (23) and cover (6), and the clear distance is greater in the unlocked position than in the locked position.

6. Cover system according to any of the preceding claims, **characterised in that**
the pivot-point anchoring device (2) is arranged on a narrow end face (9) of the cover (6), and/or
the pivot-point anchoring device (2) has a protrusion (14), in particular a lug-like projection, which can enter the cover opening (48) of a tubular container housing (22, 59) and anchor the cover (6) in the tubular container housing (22, 59) in an undercut manner in the direction of the cover opening (48).

7. Cover system (1, 58) according to any of the preceding claims, **characterised in that** the pivot-point anchoring device (2) has a profile which has a U-shaped cross section and can hold a contact region (17) projecting on the tubular container housing side between the legs (13, 14) of the U, in particular a leg (13) of the U lies approximately in the plane (A) of the main extension of the cover (6) and the opening (15) of the U in this case points outwards.

8. Cover system according to any of the preceding claims, **characterised in that** the pivot-point anchoring device (2) is arranged in one half of the cover (6), in particular at one end of the cover (6), and the axis of rotation (Y) of the locking lever (23) is arranged in the other half of the cover (6).

9. Cover system (1, 58) according to any of the preceding claims, **characterised in that** the common centre of mass of the non-locking-lever parts of the cover system (1, 58) lies between the pivot-point anchoring device (2) and the axis of rotation (Y) of the locking lever (23), such that the cover (6) automatically lowers with the pivot-point anchoring device (2) in front when the cover system is held (1, 58) only on the locking lever (23).

10. Cover system (1, 58) according to any of the preceding claims, **characterised in that** the locking system (24) rotates with the locking lever (23) and is designed such that, when the cover system (1, 58) is held only on the locking lever (23), the closing system (24) automatically moves relative to the cover (6) into the unlocked position, a receiving opening (32) of the closing system (24) for receiving a tubular container housing part (33) being accessible from the lower face (8) of the cover (6) facing the tubular container housing (22, 59) in the unlocked position.

11. Cover system (1) according to any of the preceding claims, the cover system (1) being for tool-free, repeatable closing of a backflow stop housing, **characterized in that** the cover system (1) has a backflow flap actuating lever (5) arranged on the cover (6), the backflow flap actuating lever (5) being arranged with respect to the locking lever (23) such that unlocking the locking lever (23) requires a previous actuation the backflow flap actuating lever (5).

12. Cover system (1, 58) according to any of the preceding claims, **characterised in that** the cover (6) has at least one lateral guide recess (35, 36), in particular an eyelet-shaped guide recess, between the pivot-point anchoring device (2) and the closing system (24) for receiving at least one guide pin (39, 40) on the tubular container housing side, in order to be able to guide the cover (6) in the direction of the cover opening (48) when the cover (6) is rotated about the contact region (17).

13. Cover system (1, 58) according to any of the preceding claims, **characterised in that** the cover system (1, 58), with the locking lever (23) in the locked position, can close the cover opening completely along the cover seat in a liquid-tight manner, in particular up to at least 0.1 bar liquid overpressure, in particular up to at least 0.5 bar liquid overpressure.

14. Tubular container (57, 60) for wastewater, in particular a backflow stop, comprising
a tubular container housing (22, 59) having a cover opening (48), and
a cover system (1, 58) according to any of the preceding claims.

15. Tubular container (57, 60) according to claim 14, comprising a cover system (1, 58) according to claim 12, **characterized in that**
the tubular container housing (22, 59) correspondingly has at least one guide pin (39, 40) which can be received by the at least one guide recess (35, 36), in particular the at least one guide pin (39, 40) tapers on the side (53) thereof facing the pivot-point anchoring device (2) in the closed state and/or on the side (54) thereof facing the closing system and/or on the side thereof facing away from the cover opening (55), with increasing distance from the tubular container housing (22, 59), and particularly tapers continuously in a curved and/or chamfered contour.

## Revendications

1. Système de couvercle (1, 58) permettant la fermeture et l'ouverture reproductibles, sans outil, d'un boîtier de récipient tubulaire (22, 59) destiné à des eaux usées, en particulier d'un boîtier de fermeture d'eau de refoulement, comprenant
un couvercle (6), qui peut fermer une ouverture de couvercle (48) d'un boîtier de récipient tubulaire (22, 59) de manière ajustée grâce à une mise en place du couvercle (6) au niveau d'un siège de couvercle (49) de l'ouverture de couvercle (48), et
un dispositif d'ancrage à point de pivotement (2) agencé au niveau du couvercle (6) et pouvant positionner le couvercle (6) au niveau d'une région de mise en place (17) d'un boîtier de récipient tubulaire (22, 59) et l'ancrer de manière rotative au niveau de ladite région de mise en place (17) et autour de ladite région de mise en place (17), et
un système de verrouillage (3) agencé au niveau du couvercle (6) et espacé par rapport au dispositif d'ancrage à point de pivotement (2), présentant un levier de verrouillage rotatif (23) et un système de fermeture (24) collaborant avec le levier de verrouillage et permettant de verrouiller et déverrouiller le couvercle (6) au niveau du boîtier de récipient tubulaire (22, 59), dans lequel le levier de verrouillage (23) est rotatif en va-et-vient entre une position verrouillée et une position déverrouillée, **caractérisé en ce que**
le système de verrouillage (3) permet une fermeture ajustée de l'ouverture de couvercle (48) du boîtier de récipient tubulaire (22, 59) en maintenant et en manipulant le système de couvercle (1, 58) uniquement grâce au levier de verrouillage (23).

2. Système de couvercle (1, 58) selon la revendication 1, **caractérisé en ce que**
le dispositif d'ancrage à point de pivotement (2) peut positionner le couvercle (6) au niveau du boîtier de récipient tubulaire (22, 59) en le pressant contre une région de mise en place (17) d'un boîtier de récipient tubulaire (22, 59), en particulier contre une région de mise en place (17) à l'intérieur de l'ouverture de couvercle (48) du boîtier de récipient tubulaire (22, 59), et peut l'ancrer de manière rotative au niveau de ladite région de mise en place (17) et autour de ladite région de mise en place (17), et
le système de verrouillage (3) est conçu de telle manière qu'une rotation du levier de verrouillage (23) avec pression vers le dispositif d'ancrage à point de pivotement (2) amène le levier de verrouillage (23) dans la position verrouillée et de telle manière qu'une rotation du levier de verrouillage (23) avec traction en s'éloignant du dispositif d'ancrage à point de pivotement (2) amène le levier de verrouillage (23) dans la position déverrouillée.

3. Système de couvercle (1, 58) selon l'une quelconque des revendications précédentes, **caractérisé en ce que**
le système de fermeture (24) présente un verrou (27, 28) sur chacun des deux côtés (11, 12) opposés du couvercle (6) et le levier de verrouillage (23) enjambe le côté supérieur (7) du couvercle (6) d'un verrou (27) jusqu'à l'autre verrou (28).

4. Système de couvercle (1, 58) selon l'une quelconque des revendications précédentes, **caractérisé en ce que**
le levier de verrouillage (23) enjambe le couvercle (6) de manière arquée dans l'état verrouillé, de sorte qu'une distance maximale entre le couvercle (6) et le levier de verrouillage (23) verrouillé est obtenue dans une région centrale du couvercle,
et/ou
le levier de verrouillage (23) s'étend vers le centre du couvercle dans la position verrouillée.

5. Système de couvercle (1, 58) selon l'une quelconque des revendications précédentes, **caractérisé en ce que**
une faible distance est formée entre le levier de verrouillage (23) et le couvercle (6), et la faible distance est plus grande dans la position déverrouillée que dans la position verrouillée.

6. Système de couvercle selon l'une quelconque des revendications précédentes, **caractérisé en ce que**
le dispositif d'ancrage à point de pivotement (2) est agencé au niveau d'une face d'extrémité étroite (9) du couvercle (6),
et/ou
le dispositif d'ancrage à point de pivotement (2) présente une saillie (14), en particulier une saillie en forme de nez, qui peut plonger dans l'ouverture de couvercle (48) d'un boîtier de récipient tubulaire (22, 59) et peut ancrer le couvercle (6) dans le boîtier de récipient tubulaire (22, 59) en contre-dépouille en direction de l'ouverture de couvercle (48).

7. Système de couvercle (1, 58) selon l'une quelconque des revendications précédentes, **caractérisé en ce que**
le dispositif d'ancrage à point de pivotement (2) présente un profil en forme de U en coupe transversale qui peut contenir entre les branches (13, 14) du U une région de mise en place (17) faisant saillie sur le côté du boîtier de récipient tubulaire, en particulier une branche (13) du U se trouve approximativement dans le plan (A) de l'extension principale du couvercle (6) et l'ouverture (15) du U est dirigée vers l'extérieur.

8. Système de couvercle selon l'une quelconque des revendications précédentes, **caractérisé en ce que**
le dispositif d'ancrage à point de pivotement (2) est agencé dans une moitié du couvercle (6), en particulier à une extrémité du couvercle (6), et l'axe de rotation (Y) du levier de verrouillage (23) est agencé dans l'autre moitié du couvercle (6).

9. Système de couvercle (1, 58) selon l'une quelconque des revendications précédentes, **caractérisé en ce que**
le centre de gravité commun des parties n'appartenant pas au levier de verrouillage du système de couvercle (1, 58) se situe entre le dispositif d'ancrage à point de pivotement (2) et l'axe de rotation (Y) du levier de verrouillage (23), de sorte que le couvercle (6) s'abaisse automatiquement vers l'avant avec le dispositif d'ancrage à point de pivotement (2) lorsque le système de couvercle (1, 58) est maintenu uniquement au niveau du levier de verrouillage (23).

10. Système de couvercle (1, 58) selon l'une quelconque des revendications précédentes, **caractérisé en ce que**
le système de fermeture (24) tourne avec le levier de verrouillage (23) et est conçu de telle manière que, lorsque le système de couvercle (1, 58) est maintenu uniquement au niveau du levier de verrouillage (23), le système de fermeture (24) se place automatiquement par rapport au couvercle (6) dans la position déverrouillée, dans lequel, dans la position déverrouillée, une ouverture de réception (32) du système de fermeture (24) est accessible à partir de la face inférieure (8) du couvercle (6) tournée vers le boîtier de récipient tubulaire (22, 59) afin de recevoir une partie de boîtier de récipient tubulaire (33).

11. Système de couvercle (1) selon l'une quelconque des revendications précédentes, dans lequel le système de couvercle (1) est destiné à la fermeture reproductible et sans outil d'un boîtier de fermeture d'eau de refoulement, **caractérisé en ce que**
le système de couvercle (1) présente un levier d'actionnement de volet d'eau de refoulement (5) agencé au niveau du couvercle (6), dans lequel le levier d'actionnement de volet d'eau de refoulement (5) est agencé par rapport au levier de verrouillage (23) de sorte que le déverrouillage du levier de verrouillage (23) nécessite un actionnement préalable du levier d'actionnement de volet d'eau de refoulement (5).

12. Système de couvercle (1, 58) selon l'une quelconque des revendications précédentes, **caractérisé en ce que**
le couvercle (6) présente entre le dispositif d'ancrage à point de pivotement (2) et le système de fermeture (24) au moins un évidement de guidage (35, 36) latéral, en particulier un évidement de guidage en forme d'œillet, afin de recevoir au moins une broche de guidage (39, 40) située sur le côté du boîtier de récipient tubulaire, afin de pouvoir guider le couvercle (6) en direction de l'ouverture de couvercle (48) lorsque le couvercle (6) tourne autour de la région de mise en place (17).

13. Système de couvercle (1, 58) selon l'une quelconque des revendications précédentes, **caractérisé en ce que**
en position verrouillée, le système de couvercle (1, 58) avec le levier de verrouillage (23) peut fermer complètement l'ouverture de couvercle le long du siège de couvercle de manière étanche aux liquides, en particulier jusqu'à au moins 0,1 bar de surpression de liquide, en particulier jusqu'à au moins 0,5 bar de surpression de liquide.

14. Récipient tubulaire (57, 60) pour eaux usées, en particulier fermeture d'eau de refoulement, avec
un boîtier de récipient tubulaire (22, 59) comprenant une ouverture de couvercle (48), et
un système de couvercle (1, 58) selon l'une quelconque des revendications précédentes.

15. Récipient tubulaire (57, 60) selon la revendication 14, comprenant un système de couvercle (1, 58) selon la revendication 12, **caractérisé en ce que**
le boîtier de récipient tubulaire (22, 59) présente de manière correspondante au moins une broche de guidage (39, 40) pouvant être reçue par le au moins un évidement de guidage (35, 36), en particulier la au moins une broche de guidage (39, 40) se rétrécit, en particulier se rétrécit de manière continue selon un tracé incurvé et/ou chanfreiné, sur son côté (53) tourné vers le dispositif d'ancrage à point de pivotement (2) dans l'état fermé et/ou sur son côté (54) tourné vers le système de fermeture et/ou sur son côté (55) détourné de l'ouverture de couvercle lorsque la distance par rapport au boîtier de récipient tubulaire (22, 59) augmente.
